# EUROPÄISCHE PATENTANMELDUNG

(11) **EP 0 847 717 A2**
(43) Veröffentlichungstag der Anmeldung: **17.06.1998**
(21) Anmeldenummer: 97120261.9
(22) Anmeldetag: 19.11.1997
(51) Int. Cl.: A47C 3/30

(54) **Längenverstellbare Säule für Stühle oder dergleichen**

(30) Priorität: 12.12.1996 DE 19651653
(71) Anmelder: SUSPA COMPART Aktiengesellschaft, 90518 Altdorf (DE)
(72) Erfinder: Harrer, Harald, 95445 Bayreuth (DE); Oracz, Steve, Grand Rapids, Michigan 49544 (US); Richter, Stefan, 91344 Waischenfeld (DE)
(74) Vertreter: Rau, Manfred, Dr. Dipl.-Ing.

(57) **Zusammenfassung**

Eine längenverstellbare Säule für Stühle oder dergleichen weist ein Standrohr (1) mit einem hierin angeordneten, pneumatisch oder hydropneumatischen Längenverstellelement auf. Dessen Kolbenstange (7) ist im Bereich ihres freien Endes mit einer Bodenplatte (9) des Standrohres (1) elastisch verrastet.

## Beschreibung

Die Erfindung betrifft eine längenverstellbare Säule nach dem Oberbegriff des Anspruches 1.

Aus der EP 0 366 889 B (entspr. US-Patent 4,969,619) ist es bekannt, die Kolbenstange über ein Axial-Wälzlager auf der Bodenplatte abzustützen und an deren Unterseite mit einer elastischen Sicherungsklammer lösbar zu befestigen. Die Montage ist aufwendig, weil zuerst die Einzelteile des Axial-Wälzlagers auf einen Zapfen der Kolbenstange aufgeschoben werden müssen. Anschließend muß die Kolbenstange von unten nach oben in das mit seiner Bodenplatte nach oben gehaltene Standrohr eingeführt werden, damit die Teile des Wälzlagers nicht wieder von der Kolbenstange fallen. Nach dem Einführen in eine entsprechende Öffnung der Bodenplatte wird eine Sicherungsscheibe aufgesetzt und dann der Sicherungsring oder eine entsprechende Sicherungsklammer angebracht.

Zur Vereinfachung ist es bereits aus der EP 0 477 617 (entspr. US-Patent 5,269,398) bekannt geworden, das Wälzlager mittels eines elastischen Rings auf den, Zapfen der Kolbenstange zu halten, wodurch eine Vormontage- und Transportsicherung erreicht wird.

Dein gleichen Zweck dient eine Ausgestaltung nach der DE 39 32 146 A (entspr. US-Patent 5,120,011), wobei das Wälzlager in einem Käfig gehalten wird, der elastisch auf den Zapfen der Kolbenstange aufgerastet wird.

Die anschließende Montage im Standrohr erfolgt wiederum in der Weise, daß der Zapfen durch die Öffnung in der Bodenplatte hindurchgeführt, eine Beilagscheibe aufgeschoben und anschließend ein Sicherungsring oder eine Sicherungsklammer angebracht wird.

Der Erfindung liegt die Aufgabe zugrunde, eine längenverstellbare Säule der gattungsgemäßen Art so auszugestalten, daß eine besonders einfache Montage der Gasfeder im Standrohr möglich ist.

Diese Aufgabe wird erfindungsgemäß durch die Merkmale im Kennzeichnungsteil des Anspruches 1 gelöst. Durch die erfindungsgemäße Lösung wird erreicht, daß das Ende der Kolbenstange lediglich teilweise durch die Öffnung in der Bodenplatte des Standrohres geschoben wird und hierbei elastisch mit der Bodenplatte verrastet. Eine besonders einfache konstruktive Lösung gibt Anspruch 2 wieder, wobei hier eine einfache Demontage der Gasfeder vom Standrohr möglich ist.

Anspruch 3 beinhaltet, daß der Sicherungsring durch die Öffnung der Bodenplatte hindurchgeschoben wird, wobei der Sicherungsring seine Lage in Richtung der Achse der Kolbenstange nicht verändern kann.

Anspruch 4 gibt wieder, daß der Sicherungsring an einem Haltekörper angebracht ist, der wiederum am Ende der Kolbenstange angebracht ist.

Anspruch 5 gibt wieder, daß der Haltekörper sich mit einer Abstütz-Platte auf der Bodenplatte abstützt, wobei nach Anspruch 6 sich auch die Kolbenstange mit ihrer Stiniseite gegen diese Abstütz-Platte abstützen kann. Durch diese Maßnahmen ist einerseits eine sichere Abstützung und andererseits auch eine Drehbarkeit der Gasfeder gegenüber dem Standrohr sichergestellt.

Nach Anspruch 7 dient der Haltekörper gleichzeitig auch als elastischer Anschlag für das Gehäuse des Längenverstellelementes, wenn dieses weitestmöglich in das Standrohr eingefahren ist.

Auch wenn der Haltekörper grundsätzlich fest mit der Kolbenstange verbunden ist, beispielsweise also an diese angespritzt sein kann, ist die Lösung nach Anspruch 8 von besonderem Vorteil, d.h. der Haltekörper wird auch mit der Kolbenstange elastisch mittels nur eines Handgriffs verrastet. Anspruch 9 gibt hierfür eine besonders vorteilhafte Ausgestaltung wieder.

Die Ansprüche 10 bis 15 geben weitere vorteilhafte Ausgestaltungen an.

Weitere Merkmale, Vorteile und Einzelheiten der Erfindung ergeben sich aus der nachfolgenden Beschreibung von Ausführungsbeispielen anhand der Zeichnung. Es zeigen
- Fig. 1: eine Längsansicht einer teilweise aufgebrochen dargestellten Säule nach der Erfindung,
- Fig. 2: einen Haltekörper in Seitenansicht mit geschnitten dargestelltem Sicherungsring und Bodenplatte,
- Fig. 3: einen Querschnitt durch den Haltekörper gemäß der Schnittlinie III-III in Fig. 2,
- Fig. 4: einen Längsschnitt durch den Haltekörper ohne Sicherungsring und Bodenplatte gemäß der Schnittlinie IV-IV in Fig. 3,
- Fig. 5: den Sicherungsring in Draufsicht,
- Fig. 6: einen Querschnitt durch den Sicherungsring gemäß der Schnittlinie VI-VI in Fig. 5,
- Fig. 7: einen Teil einer Kolbenstange,
- Fig. 8: eine weitere Ausführungsform einer Abstütz- und Lagereinheit im Teil-Längsschnitt,
- Fig. 9: eine Draufsicht auf eine Abstütz- und Lagereinheit, die ähnlich der nach Fig. 8 ist,
- Fig. 10: einen Querschnitt durch die Abstütz- und Lagereinheit nach Fig. 9,
- Fig. 11: die Montage der Abstütz- und Lagereinheit nach Fig. 9 und 10 auf einer Kolbenstange und
- Fig. 12: eine gegenüber Fig. 4 abgewandelte Ausführungsform des Haltekörpers.

Die in der Zeichnung dargestellte Stuhl-Säule weist ein Standrohr 1 auf, in dem eine längenverstellbare Gasfeder 2 als pneumatisches oder hydropneumatisches Kolben-Zylinder-Verstellelement angeordnet ist. Das Standrohr 1 und die Gasfeder 2 haben eine gemeinsame Mittel-Längs-Achse 3.

Ein äußeres Gehäuse 4 der Gasfeder 2 ist in Richtung der Achse 3 verschiebbar in einer Führungsbüchse 5 abgestutzt, die an einem - in der Zeichnung oberen - Ende 6 des Standrohres 1 angeordnet ist. Bei diesem äußeren Gehäuse 4 der Gasfeder 2 kann es sich um deren Gehäuse selber handeln oder um ein dieses außen umgebendes Schutzrohr.

Aus dein Gehäuse 4 der Gasfeder 2 ragt eine Kolbenstange 7 heraus, die über eine Abstütz- und Lager-Einheit 8 gegenüber einer Bodenplatte 9 des Standrohres 1 in Richtung der Achse 3 abgestützt ist. Die Bodenplatte 9 befindet sich an dem dem einen Ende 6 entgegengesetzten - in der Zeichnung unten dargestellten - anderen Ende 10 des Standrohres 1. Die Gasfeder 2 ist weiterhin mit ihrer Kolbenstange 7 in Richtung der Achse 3 gegenüber dem Standrohr 1 festgelegt, so daß bei Längenverstellungen der Gasfeder 2 durch Betätigung eines Betätigungsstiftes 11 das Gehäuse 4 der Gasfeder 2 aus dem Standrohr 1 herausgefahren oder in dieses hineingeschoben wird. Der Betätigungsstift 11 befindet sich an dem der Kolbenstange 7 entgegengesetzten Ende des Gehäuses 4 der Gasfeder 2. Hier wird auch ein Stuhlsitz oder dergleichen befestigt.

Das Standrohr 1 weist benachbart zum Ende 10 einen sich zu diesem hin leicht konisch verjüngenden Konusabschnitt 12 auf, mittels dessen eine Befestigung des Standrohres 1 in einer entsprechenden Konusbüchse eines Stuhlkreuzes oder dergleichen möglich ist.

Soweit die primär als Stuhl-Säule dienende Säule bis hierher beschrieben ist, ist sie - mit der Ausnahme Abstütz- und Lagereinheit 8 und des zugeordneten Teils der Kolbenstange 7 - allgemein bekannt, handelsüblich und beispielsweise in der DE-PS 19 31 012 (entspr. US-Patent 3,711,054) oder der EP 0 133 524 B (entspr. US-Patent 4,979,718) beschrieben und dargestellt.

Die ringscheibenförmige Bodenplatte 9 stützt sich auf einen topfförmig nach innen gerollten Rand 13 des Standrohres 1 im Bereich von dessen Ende 10 ab. Dieser nach innen gerollte Rand 13 weist im Querschnitt etwa eine Halbkreisform auf, d.h. er hat etwa den Querschnitt eines Halb-Kreisrings.

Um ein Herausziehen der Bodenplatte 9 nach oben aus dein Standrohr 1 zu verhindern, sind unmittelbar oberhalb der Bodenplatte 9 im Standrohr 1 aus dessen Innenwand 14 vorragende Vorsprünge 15 ausgebildet, die durch Eindrücken von außen erzeugt werden können. Beispielsweise können sechs solcher Vorsprünge 15 gleichmäßig auf dem Umfang verteilt vorgesehen sein. Diese Maßnahme dient dazu zu verhindern, daß beispielsweise bei einem Hochheben des Stuhls an seinem Sitzteil die Gasfeder 2 mit Bodenplatte 9 aus dem Standrohr 1 nach oben herausgezogen wird. Diese Vorsprünge 15 haben also keine größeren Kräfte, sondern nur das Gewicht des Standrohrs 1 mit einem daran befestigten Fußkreuz aufzunehmen. Eine derartige Ausgestaltung der Abstützung und Befestigung der Bodenplatte 9 ist ebenfalls handelsüblich und allgemein bekannt und beispielsweise in der EP 0 366 889 B (entspr. US-Patent 4,969,619) dargestellt und beschrieben. Die Bodenplatte kann auch einstückig mit dem Standrohr ausgebildet oder mit diesem verschweißt sein.

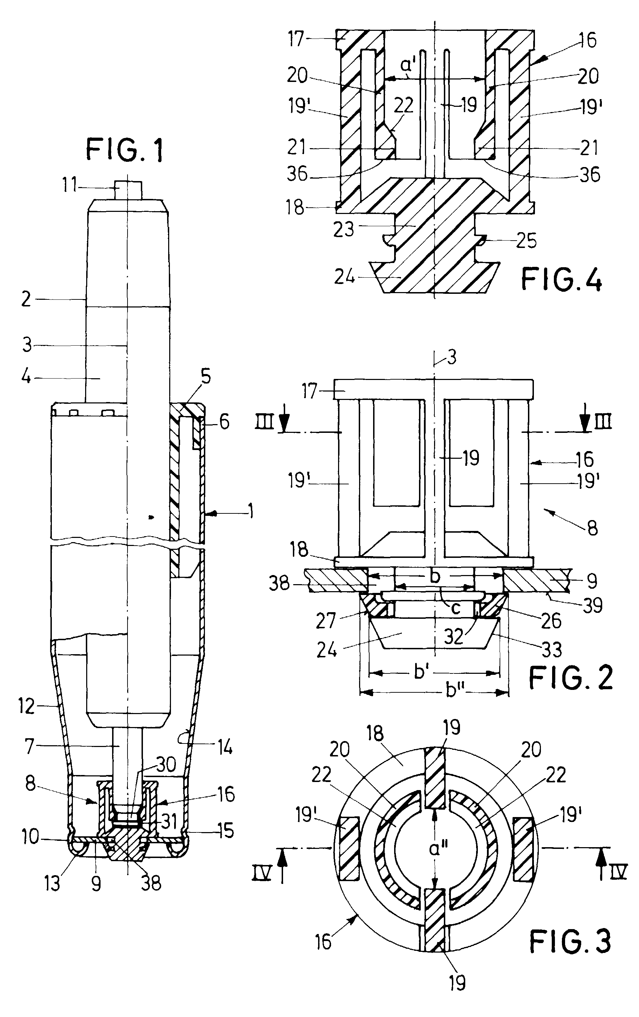

Wie sich aus den Fig. 2 bis 4 ergibt, weist die Abstütz- und Lagereinheit 8 einen Haltekörper 16 auf, der im wesentlichen die Form eines zylindrischen Käfigs aufweist. Dieser wird durch einen oberen kreisringförmigen Auflage-Ring 17 und eine untere, ebenfalls kreisscheibenförmige Abstütz-Platte 18 gebildet, die mittels Stützstäben 19, 19' miteinander verbunden sind. Mit dem Auflage-Ring 17 sind parallel zu den Stützstäben 19, 19' und parallel zur Achse 3 verlaufende, zur Abstütz-Platte 18 hin gerichtete Verriegelungsarme 20 verbunden, die - wie sich aus Fig. 4 ergibt - teilzylindrisch ausgebildet sind und sich über etwas weniger als 180° erstrecken. Sie enden jeweils vor den sich diametral gegenüberliegenden Stützstäben 19, während die Stützstäbe 19' jeweils - bezogen auf die Achse 3 - radial außerhalb der Verriegelungsarme 20 angeordnet sind. Die Verriegelungsarme 20 weisen an ihren der Abstütz-Platte 18 benachbarten freien Enden in Richtung zur Achse 3, also nach innen, vorspringende Verriegelungsbacken 21 auf, wobei zwischen den Verriegelungsarmen 20 und der Verriegelungsbacke 21 jeweils eine teilkegelstumpfförmige Übergangsfläche 22 ausgebildet ist.

An der Unterseite der Abstütz-Platte 18 ist koaxial mit der Achse 3 ein Befestigungszapfen 23 ausgebildet, der im Bereich seines freien Endes einen sich zum freien Ende hin kegelstumpfförmig verjüngenden Abstütz-Bund 24 aufweist. Zwischen dein Abstütz-Bund 24 und der Abstütz-Platte 18 ist am Befestigungszapfen 23 ein Halte-Bund 25 ausgebildet.

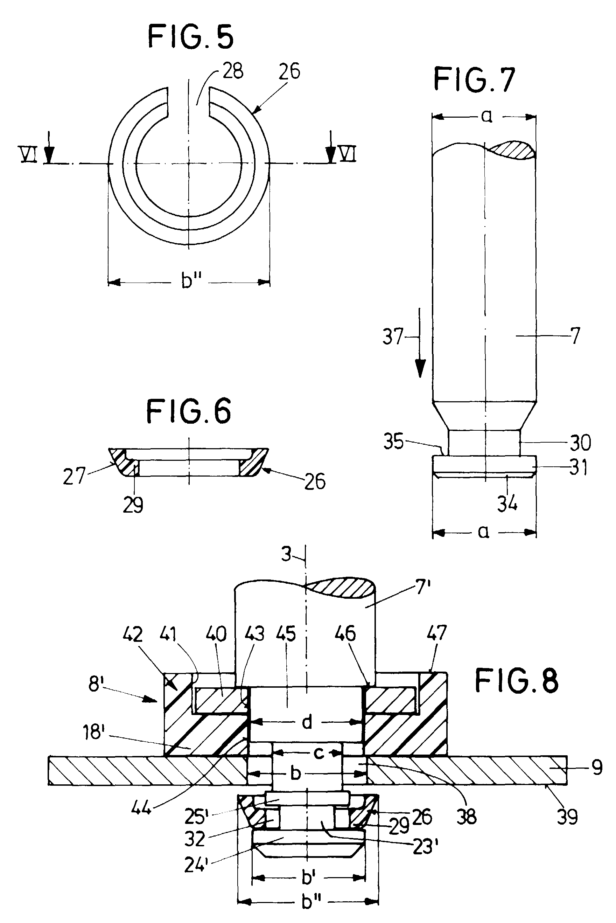

Weiterhin weist die Abstütz- und Lager-Einheit 8 einen in den Fig. 5 und 6 dargestellten Sicherungsring 26 auf, der - wie aus Fig. 6 erkennbar ist - eine sich kegelstumpfförmig verjüngende Außenfläche 27 aufweist. Der Sicherungsring 26 weist einen Schlitz 28 auf. Er ist im Bereich der größten Verjüngung der Außenfläche 27 mit einem radial zur Achse 3 nach innen vorspringenden Ringabschnitt 29 versehen.

Die Kolbenstange 7 weist im Bereich ihres freien Endes eine Einschnürung 30 auf, die den Verriegelungsarmen 20 mit Verriegelungsbacken 21 angepaßt ist. An ihren, freien Ende weist sie wiederum einen Verriegelungs-Bund 31 auf, dessen Durchmesser a dem der ansonsten zylindrischen Kolbenstange 7 entspricht.

Die Montage geht wie folgt vor sich:
Der aus elastischem Material bestehende Sicherungsring 26 wird über den Abstütz-Bund 24 auf den Befestigungszapfen 23 geschoben. Hierbei kommt der Ringabschnitt 29 zwischen den Abstütz-Bund 24 und den Halte-Bund 25, wie Fig. 2 entnehmbar ist, wobei aber zwischen dem Ringabschnitt 29 und dem Befestigungszapfen 23 noch Luft 32 ist, so daß der Sicherungsring 26 noch weiter radial zur Achse 3 zusammengedrückt werden kann. Wie aus Fig. 2 auch erkennbar ist, bildet in entspanntem Zustand des Sicherungsrings 26 dessen Außenfläche 27 mit der Außenfläche 33 des Abstütz-Bundes 24 eine durchgehend kegelstumpfförmige Fläche.

Anschließend wird der Haltekörper 16 auf die Kolbenstange 7 aufgeschoben, wobei der Verriegelungs-Bund 31 die Verriegelungsarme 20 in Richtung zu den Stützstäben 19' auslenkt, wenn der Verriegelungs-Bund 31 zwischen den Übergangsflächen 22 und den Verriegelungsbacken 21 der Verriegelungsarme 20 hindurchgeschoben wird. Wenn der Verriegelungs-Bund 31 durch die Verriegelungsarme 20 hindurchgeschoben ist, kommt er mit seiner Stirnseite 34 zur Anlage auf der Abstütz-Platte 18. Gleichzeitig kommen die Verriegelungsarme 20 von ihm frei und schnappen wieder radial zur Achse 3 nach innen, so daß sich die Verriegelungsbacken 21 mit den Übergangsflächen 22 in die Einschnürung 30 legen. Da die einander zugewandten Flächen 35, 36 am Verriegelungsbund 31 einerseits und an den Verriegelungsbacken 21 andererseits radial zur Achse 30 verlaufen, kann die Verriegelung des Haltekörpers 16 mit der Kolbenstange 7 durch eine Kraft entgegen der Einschubbrichtung 37 nicht gelöst werden. Der Innendurchmesser a' der Verriegelungsarme 20 entspricht etwa dem Durchmesser a der Kolbenstange 7 mit Verriegelungsbund 31, so daß der Haltekörper 16 im wesentlichen radial spielfrei zur Kolbenstange 7 an dieser befestigt ist. Der Verriegelungs-Bund 31 liegt auch in Richtung der Achse 3 im wesentlichen spielfrei zwischen der Abstütz-Platte 18 und den Verriegelungs-Armen 20. Der Abstand a'' der beiden einander diametral gegenüberstehenden Stützstäbe 19 ist etwa gleich dem Durchmesser a, so daß ein Lösen der Verbindung zwischen Kolbenstange 7 und Haltekörper 16 durch eine Auslenkung der Kolbenstange 7 relativ zum Haltekörper 16 zwischen den Verriegelungsarmen 20 ausgeschlossen ist.

Die anschließende Montage des Haltekörpers 16 an der Bodenplatte 9 erfolgt in der Weise, daß der Abstütz-Bund 24 vom Inneren des Standrohres 1 her durch eine koaxial zur Achse 3 in der Bodenplatte 9 ausgebildete Öffnung 38 geschoben wird. Der Durchmesser b dieser Öffnung 38 ist etwas größer als der größte Durchmesser b' der Außenfläche 33 des Abstütz-Bundes 24. Der Durchmesser b der Öffnung 38 ist aber kleiner als der größte Durchmesser b'' des Sicherungsrings 26 in dem in der Zeichnung dargestellten entspannten Zustand. Der Sicherungsring 26 wird beim Hindurchschieben durch die Öffnung 38 zusammengedrückt, was aufgrund des Schlitzes 28 und der Luft 32 zwischen dem Ringabschnitt 29 und den, Befestigungszapfen 23 ohne weiteres möglich ist. Nach dem Hindurchschieben des Sicherungsringes 26 durch die Öffnung 38 weitet sich der Sieherungsring 26 wieder auf und legt sich gegen die Unterseite 39 der Bodenplatte 9. Da der Durchmesser c des Befestigungszapfens 23 im Bereich der Öffnung 38 deutlich kleiner ist als deren Durchmesser b, hat die Kolbenstange 7 radial zur Bodenplatte 9 und damit zum Standrohr 1 ein geringes radiales Spiel, so daß bei einer nicht exakt koaxialen Führung der Gasfeder 2 in der Führungbüchse 5 des Standrohres 1 die Kolbenstange 7 mit dem Haltekörper 16 radial nachgeben kann. Die Bodenplatte 9 ist angenähert spielfrei zwischen der Abstütz-Platte 18 und den, Sicherungsring 26 angeordnet. Im übrigen ist die Kolbenstange 7 gegenüber dem Haltekörper 16 und/oder der Haltekörper gegenüber der Bodenplatte 9 um die Achse drehbar, so daß insgesamt die Gasfeder 2 im Standrohr 1 um ihre Achse 3 drehbar ist.

Zum Lösen der Verbindung zwischen Gasfeder 2 und Standrohr 1 wird der Sicherungsring 26 entweder soweit zusammengedrückt, daß er wieder durch die Öffnung 38 der Bodenplatte 9 geschoben werden kann, oder soweit aufgebogen, daß er über den Abstütz-Bund 24 abgezogen werden kann. Weiterhin ist es möglich, den Sicherungsring 26 durch entsprechende Aufweitung im Bereich seines Schlitzes 28 quer zur Achse 3 vom Befestigungszapfen 23 herunterzuschieben.

Wenn die Gasfeder 2 weitestmöglich zusammengefahren wird, dann setzt das Gehäuse 4 auf den, Auflage-Ring 17 des Haltekörpers 16 auf. Der Haltekörper 16 ersetzt insoweit die üblicherweise ansonsten vorgesehenen, aus Gummi oder dergleichen bestehenden Anschlagdämpfer. Dies wird insbesondere dadurch unterstützt, daß der Haltekörper aus einem hartelastischem Kunststoff besteht und der oberhalb der Bodenplatte 9 befindliche Bereich käfigartig ausgebildet ist.

Bei dem Ausführungsbeipiel nach Fig. 8 werden identische Teile mit identischen Bezugsziffern und konstruktiv andere, funktionell gleiche Teile mit denselben Bezugsziffern mit einem hochgesetzten Strich bezeichnet, ohne daß es in jedem Fall einer erneuten Beschreibung bedarf. Die in Fig. 8 dargestellte Abstütz- und Lagereinheit 8' weist eine ringzylindrische Metallscheibe 40 auf, die in eine zylindrische Ausnehmung 41 eines topfförmigen Lagerkörpers 42 aus einem Kunststoff mit guten Gleiteigenschaften gegenüber Metall, beispielsweise aus Polyamid, eingesetzt ist. Die Scheibe 40 und der Lagerkörper 42 weisen zur Achse 3 konzentrische Kreis-Öffnungen 43, 44 auf, die einen verjüngten Abschnitt 45 der Kolbenstange 7' im wesentlichen spielfrei aufnehmen. Die Scheibe 40 liegt gegen einen Ringbund 46 an, der am Übergang vom verjüngten Abschnitt 45 in die Kolbenstange 7 ausgebildet ist. Der Lagerkörper 42 steht in Richtung auf das in Fig. 8 nicht dargestellte Gehäuse der Gasfeder mit einem vorspringenden Anschlagrand 47 vor. Gegen diesen Anschlagsrand 47 schlägt das Gehäuse 2 bei einem völligen Einfahren der Kolbenstange 7' in das Gehäuse an.

Der Lagerkörper 42 liegt mit einer Abstütz-Platte 18' auf der Bodenplatte 9 auf. Diese Abstütz-Platte 18' kann sich aufgrund ihrer guten Gleiteigenschaften gegenüber Metall auf der Bodenplatte 9 drehen. Der Lagerkörper 42 ist also gleichzeitig ein Drehlager für die Gasfeder 2 mit Kolbenstange 7' relativ zur Bodenplatte 9 des Standrohres 1.

Bei diesen, Ausführungsbeispiel ist ein Befestigungszapfen 23' an der Kolbenstange 7' ausgebildet, der sich an den verjüngten Abschnitt 45 anschließt. Auch dieser Befestigungszapfen 23' weist im Bereich seines freien Endes einen sich zum freien Ende hin kegelstumpfförmig verjüngenden Abstütz-Bund 24' auf. Weiterhin ist zwischen dem Abstütz-Bund 24' und dem verjüngten Abschnitt 45 an, Befestigungszapfen 23' ein Halte-Bund 25' ausgebildet.

Es ist weiterhin ein Sicherungsring 26 vorgesehen, dessen Ausgestaltung den Figuren 5 und 6 und der obigen Beschreibung entspricht.

Bei der Montage wird zuerst der Lagerkörper 42 mit der Metallscheibe 40 über den Befestigungszapfen 23' auf den verjüngten Abschnitt 45 der Kolbenstange 7 geschoben. Anschließend wird der Sicherungsring 26 in der bereits beschriebenen Weise auf den Befestigungszapfen 23' geschoben. Er bildet so auch eine Transportsicherung für die Abstütz- und Lagereinheit 8', da die Kreis-Öffnung 44 des Lagerkörpers 42 einen kleineren Durchmesser d aufweist als der Sicherungsring 26 in entspanntem Zustand.

Bei der anschließenden Befestigung der Kolbenstange 7' an der Bodenplatte 9 wird - wie oben bereits beschrieben - der Abstütz-Bund 24' vom Inneren des Standrohres 1 her durch die Öffnung 38 in der Bodenplatte 9 geschoben. Aufgrund der geschilderten Durchmesserverhältnisse kann der Abstütz-Bund 24' ohne weiteres durch die Öffnung 38 geschoben werden. Anschließend wird der Sicherungsring 26 beim Hindurchschieben durch die Öffnung 38 zusammengedrückt. Danach weitet sich der Sicherungsring 26 wieder und legt sich gegen die Unterseite 39 der Bodenplatte 9.

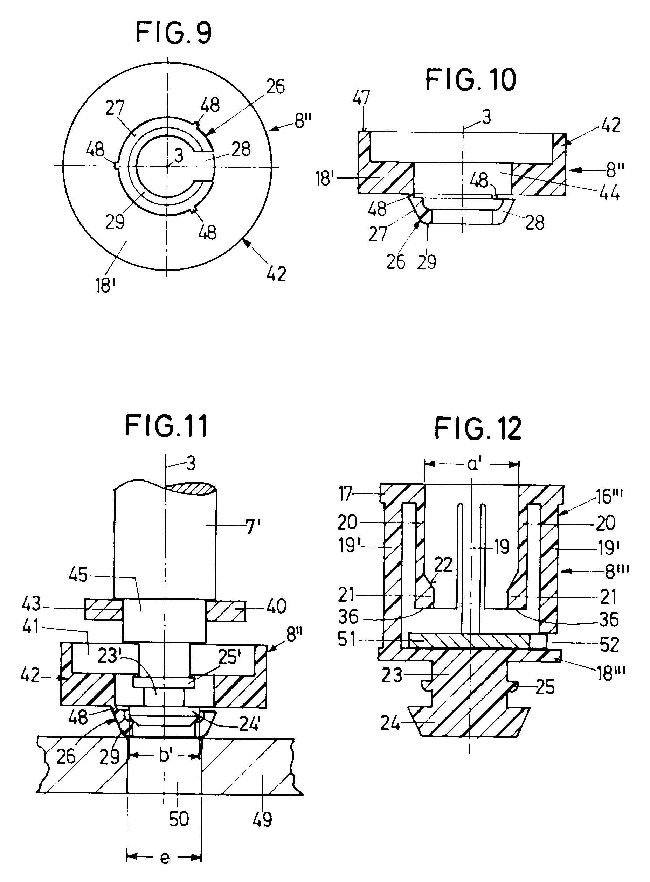

Das Ausführungsbeispiel nach den Figuren 9 bis 11 entspricht weitestgehend dem nach Fig. 8, weswegen ohne weitere Beschreibung weitgehend dieselben Bezugsziffern verwendet werden können. Dieses Ausführungsbeispiel unterscheidet sich von dem nach Fig. 8 im wesentlichen dadurch, daß der untere Sicherungsring 26 bei der Herstellung einstückig mit dem Lagerkörper 42 hergestellt wird, mit diesem zusammen also eine Abstütz- und Lagereinheit 8'' bildet. Wie aus den Figuren 9 und 10 hervorgeht, ist hierzu der Sicherungsring 26 mit dem Lagerkörper 42 einstückig mittels einiger weniger dünner Verbindungsstege 48 verbunden. Zur Montage der Abstütz- und Lagereinheit 8'' auf der Kolbenstange 7' wird die Metallscheibe 40 auf den verjüngten Abschnitt 45 geschoben und die Abstütz- und Lagereinheit 8'' auf eine Montageplatte 49 aufgesetzt, die eine Bohrung 50 aufweist, deren Durchmesser e größer als der Durchmesser b' des Abstütz-Bundes 24' ist, so daß der Abstütz-Bund 24' in die Bohrung 50 eintreten kann. Andererseits ist der Durchmesser e so klein, daß der Ringabschnitt 29 - wie in Fig. 11 dargestellt - auf der Montageplatte 49 aufliegt. Der Abstütz-Bund 24' wird aus der in Fig. 11 dargestellten Position durch den Sicherungsring 26 hindurchgedrückt, wobei die Verbindungsstege 48 durchreißen. Der Sicherungsring 26 liegt dann - wie bei den vorherigen Ausführungsbeispielen - mit seinem Abschnitt 29 zwischen dem Abstütz-Bund 24' und dem Halte-Bund 25' der Kolbenstange 7'.

In Fig. 12 ist eine leicht abgewandelte Ausführungsform eines Haltekörpers 16''' dargestellt, die sich von demjenigen nach den Figuren 2 bis 4 dadurch unterscheidet, daß die Abstütz-Platte 18''' mit einem zusätzlichen scheibenförmigen Verstärkungskörper 51 verstärkt ist. Dieser Verstärkungskörper 51 kann in die Abstütz- und Lagereinheit 8''' miteingespritzt sein, oder aber durch eine seitliche Öffnung 52 eingeschoben sein, so daß er auf der Abstütz-Platte 18''' aufliegt. Auf diesen, in der Regel aus Metall bestehenden Verstärkungskörper 51 liegt dann die Kolbenstange 7 mit ihrer Stirnseite 34 an. Der Haltekörper 16''' bildet zusammen mit dem Sicherungsring 26 eine Abstütz- und Lagereinheit 8'''.

## Patentansprüche

1. Längenverstellbare Säule für Stühle oder dergleichen, mit einem Standrohr (1) und mit einem konzentrisch zu einer gemeinsamen Mittel-Längs-Achse (3) hierin angeordneten, pneumatischen oder hydropneumatischen Längenverstellelement, dessen Gehäuse (4) im Standrohr (1) radial abgestützt und in Richtung der Achse (3) verschiebbar geführt ist und dessen Kolbenstange (7, 7') im Bereich ihres freien Endes an einer eine Öffnung (38) aufweisenden Bodenplatte (9) des Standrohres (1) in Richtung der Achse (3) festgelegt ist,
dadurch gekennzeichnet, daß
die Kolbenstange (7, 7') elastisch mit der Bodenplatte (9) verrastet ist.

2. Längenverstellbare Säule nach Anspruch 1, dadurch gekennzeichnet, daß mit der Kolbenstange (7, 7') ein die Öffnung (38) der Bodenplatte (9) durchsetzender Befestigungszapfen (23, 23') verbunden ist, auf dem ein die Bodenplatte (9) hintergreifender Sicherungsring (26) angeordnet ist, der radial zur Achse (3) auf einen Durchmesser zusammengedrückbar ist, der kleiner als der Durchmesser (b) der Öffnung (38) ist.

3. Längenverstellbare Säule nach Anspruch 1 oder 2, dadurch gekennzeichnet, daß der Sicherungsring (26) zwischen jeweils einem am freien Ende des Befestigungszapfens (23, 23') ausgebildeten Abstütz-Bund (24, 24') und Halte-Bund (25, 25') angeordnet ist und mit einem Ringabschnitt (29) zwischen diese greift.

4. Längenverstellbare Säule nach Anspruch 2 oder 3, dadurch gekennzeichnet, daß der Befestigungszapfen (23) Teil eines Haltekörpers (16, 16''') ist, der am freien Ende der Kolbenstange (7) angebracht ist.

5. Längenverstellbare Säule nach Anspruch 4, dadurch gekennzeichnet, daß der Haltekörper (16, 16''') sich mit einer Abstütz-Platte (18, 18''') auf der Bodenplatte (9) abstützt.

6. Längenverstellbare Säule nach Anspruch 5, dadurch gekennzeichnet, daß die Kolbenstange (7) mit ihrer Stirnseite (31) gegen die Abstütz-Platte (18, 18''') abgestützt ist.

7. Längenverstellbare Säule nach einem der Ansprüche 4 bis 6, dadurch gekennzeichnet, daß der Haltekörper (16, 16''') auf seiner dem Gehäuse (4) zugewandten Seite mit einem Auflage-Ring (17) als Anschlag für das Gehäuse (4) versehen ist.

8. Längenverstellbare Säule nach einem der Ansprüche 4 bis 7, dadurch gekennzeichnet, daß der Haltekörper (16, 16''') mit der Kolbenstange (7) elastisch verrastet ist.

9. Längenverstellbare Säule nach Anspruch 8, dadurch gekennzeichnet, daß der Haltekörper (16, 16''') Verriegelungsarme (20) aufweist, die in eine Einschnürung (30) der Kolbenstange (7) eingreifen.

10. Längenverstellbare Säule nach einem der Ansprüche 4 bis 9, dadurch gekennzeichnet, daß der Haltekörper (16) einstückig aus hartelastischem Kunststoff besteht.

11. Längenverstellbare Säule nach einem der Ansprüche 4 bis 9, dadurch gekennzeichnet, daß die Abstütz-Platte (18''') des Haltekörpers (16''') mit einem Verstärkungskörper (51) versehen ist.

12. Längenverstellbare Säule nach einem der Ansprüche 4 bis 11, dadurch gekennzeichnet, daß der Haltekörper (16, 16''') und der Sicherungsring (26) eine Abstütz- und Lagereinheit (8, 8''') bilden.

13. Längenverstellbare Säule nach einem der Ansprüche 4 bis 12, dadurch gekennzeichnet, daß der Haltekörper (16, 16''') zwischen seinem Auflage-Ring (17) und seiner Abstütz-Platte (18) käfigartig ausgebildet ist.

14. Längenverstellbare Säule nach Anspruch 2 oder 3, dadurch gekennzeichnet, daß der Befestigungszapfen (23') an der Kolbenstange (7') ausgebildet ist.

15. Längenverstellbare Säule nach Anspruch 14, dadurch gekennzeichnet, daß auf der Kolbenstange (7') eine Abstütz- und Lagereinheit (8', 8'') angeordnet ist.
